# EUROPEAN PATENT SPECIFICATION

(11) **EP 0 779 419 B1**
(45) Date of publication and mention of the grant of the patent: **06.03.2002**
(21) Application number: 96500044.1
(22) Date of filing: 16.04.1996
(51) Int. Cl.: F02B 29/04, F02B 39/10, F01P 9/04, F02G 5/00

(54) **Improvements made in the engine assembly of automotive vehicles**
Verbesserungen am Motorenzusammenbau für Kraftfahrzeuge
Améliorations apportées à des installations de moteurs pour véhicules automobiles

(30) Priority: 13.12.1995 ES 9502450
(43) Date of publication of application: 18.06.1997
(73) Proprietor: Gonzalez Mena, Francisco, Estepona (Malaga) (ES)
(72) Inventor: Gonzalez Mena, Francisco, Estepona (Malaga) (ES)

(56) References cited:
- EP-A- 0 394 494
- GB-A- 2 147 356
- US-A- 4 480 439
- US-A- 5 036 668

## Description

This invention is based on a number of improvements made in automotive vehicles, specifically in the engine assembly thereof, these being improvements aimed at bettering the performance thereof and, thus, at reducing their energy consumption, while also minimizing their effects on the environment.

The improvements are based on harnessing the kinetic function of the vehicle proper, that is to say, its speed, in benefit of its intake compression and, additionally, to recover the heat released in the thermodynamic process of its operation proper.

### BACKGROUND OF THE INVENTION

Independently of factors unrelated to the mechanization proper of the vehicle, such as the air resistance, the road conditions, its tare, its load, etc., the performance thereof is basically a function of two factors: on one hand, the conditions under which the combustion takes place; and on the other, the energy lost in the form of heat.

Concerning the first aspect, that is to say, with regard to the conditions under which the fuel is burned, in the automobiles currently manufactured, the fundamental variables of the thermodynamic process, the pressure and the temperature, are considerably far from the values which could be considered as being optimum. This is due to the intake of oxidizer, that is, the intake of air, taking place at ambient pressure and ambient temperature.

Regarding the second aspect, given that the kinetic energy of the crankshaft and, more specifically, the energy of the pistons, is produced by means of the burning of fuel, a great amount of heat is given off in this combustion and is released into the atmosphere, thus entailing a considerable loss of energy, which is a decisive factor in the low efficiency of this type of motors.

With a view to improving the performance of the engine during acceleration, in a similar way as in European Patent 394 494, previously mentioned, in European Patent EP-A-0 394 494 a turbo-compressor is used, aided by the exhaust gases, which consequently only acts during acceleration, that is discontinuously, but which does not manage to optimise the engine's performance, that is, reduce consumption for a certain level of revolutions.

On the other hand, British Patent GB 2.147.356 A includes an admission system that increases the pressure at the air intake by means of a funnel shaped opening, located at the front of the car, so that the pressurised air activates a turbine that in turn transmits the movement to a fan, which is in charge of pressurising the combustive air, from an entry totally independent from the funnel, with the consequent losses caused by the mechanical transmission between the turbine and the fan.

Referring back once again to the first aspect, that of the lack of optimization in the thermodynamic conditions under which the fuel is burnt, it is as a result thereof that highly pollutant gas by-products are given off and are also released into the environment.

In an attempt to solve this problem, European Patent 394,494 is known to provide a pressurized intake of oxidizer; the solution however presents important functional limitations, since the electric motor acts only upon acceleration, that is to say, in a discontinuous manner, and furthermore requires a rotational regime at the turbocharger axis which renders the theoretical idea practically impossible to implement.

The solution according to U.S. Patent 5036668-A is developed to a lesser extent, wherein the feeding of the oxidizer under pressure is based on a simple electric fan which forces the entry of ambient air into an "air-air" exchanger.

### DESCRIPTION OF THE INVENTION

The improvements which this invention, as defined by the features according to claim 1, proposes have been conceived for the purpose of providing a fully satisfactory solution to each and every one of the stated aspects of the aforementioned problem.

To this end, more specifically and according to one of the features of the invention, provision has been made for the engine to be equipped with an air intake manifold positioned at the front of the vehicle, the opening of which is located on an imaginary plane perpendicular to the axle of said vehicle, such that the intake of air will be maximum as the vehicle moves forward, this manifold tapering back toward a neck positioned behind, from which the air, pressurized as a function of the vehicle speed, is suitably channeled toward the conventional induction manifold, that is to say, toward the combustion chambers thereof, so that the air that arrives at the collector, and also finally arrives at the combustion chamber, with the resulting increase in performance.

Obviously, the level of pressurization of the oxidizer is a function of the dimension of the surface area of the opening of the intake manifold (set magnitude) and the speed of the vehicle, thus the increase in the inlet pressure to the combustion chambers is, in principle, variable to a great extent in terms of whether the vehicle is being driven around town or on the open highway. For the purpose of avoiding this problem, and according to another of the features of the invention, provision has been made for a compressor, preferably electrically powered and variable-speed, to be installed, in addition to the conventional air filter and intercooler, on the aforementioned line which connects the intake manifold to the induction manifold, such that, assisted by a microprocessor and with the aid of a suitably-positioned pressure gauge, it will be possible to adjust the pressure of the air intake into the combustion chamber to the value considered to be the best possible at any given time.

To round out this system and along the same line of improving the combustion conditions, it then becomes necessary to lower the temperature of the air entering the combustion chambers, for which purpose provision has been made for a heat exchanger, capable of absorbing the heat from the air, to be installed at the opening of the intake manifold. This heat exchanger can take the form of the conventional vehicle radiator, due to the fact that, as will be seen at a later point in this document, said radiator then reduces its size for cooling the power unit, this heat exchanger being assisted by a source of cooling, consisting of an electro-thermal converter, preferably of the Peltier type, which, as is common knowledge, is capable of giving off heat on one metal plate and cold on another when an electric current is run through them.

This thus makes it possible to bring the pressure and temperature conditions under which the combustion takes place to near optimum, with which the performance of the engine is considerably improved, the consumption and the revolutions per minute patently lowering, a substantial reduction being achieved in the emissions of pollutants as well as heat generation in the power unit.

According to another of the features of the invention, provision has been made such that, for the cooling of the power unit and instead of the conventional radiator, another electro-thermal converter be used, in this case a reverse Peltier, which, along with the cooling of the coolant fluid, is capable of generating an electric current to boost the vehicle battery.

Lastly, provision has also been made for another reverse Peltier to be installed in the vehicle exhaust, in this case for the sole purpose of absorbing part of the energy from said gases and converting it into electricity to boost the battery.

### DESCRIPTION OF THE DRAWINGS

In addition to the description which is being provided and for the purpose of contributing toward a better comprehension of the features of the invention, a set of drawings, of an illustrative but not a limiting nature, is attached to this descriptive report as an integral part thereof, showing the following:

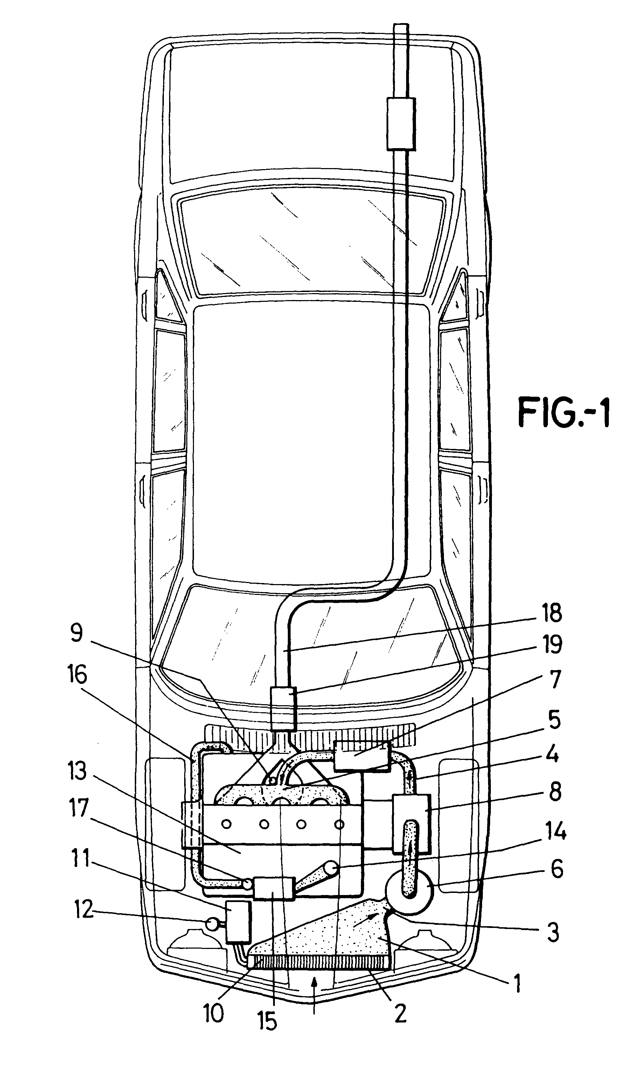

Figure 1 - Showing a plan diagram of the front end of an automobile, equipped with the improvements on its engine assembly which comprise the object of this invention.

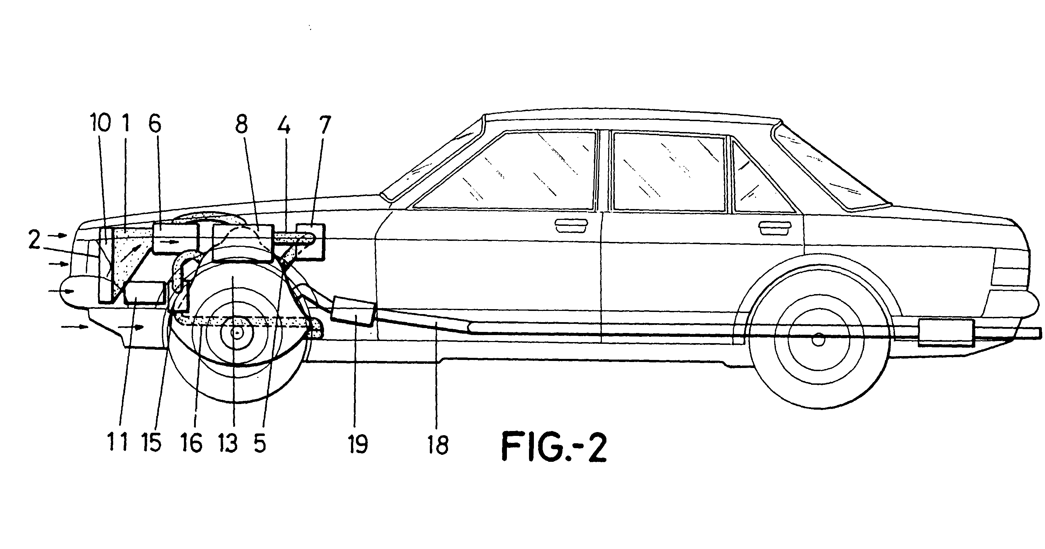

Figure 2 - Showing, also in diagram form, the same engine assembly as in the preceding drawing, but from a side view.

### PREFERRED EMBODIMENT OF THE INVENTION

These figures show how an automobile equipped with the improvements which are being advocated incorporates, on its front end, an air intake manifold (1) for which a wide-mouthed opening (2) is defined, with a cross-section of, for example, 0.2 m², air intake manifold (1) the side wall of which tapers back toward a neck (3) located behind, from which, by means of a line (4), connection is made with the conventional engine induction manifold (5), said line (4) also being provided with a conventional air filter (6) and intercooler (7), the function of which need not be described herein, as it is common knowledge.

In addition to the conventional components, filter (6) and intercooler (7), installed on the line (4) transporting the oxidizer into the induction manifold (5), a compressor is also installed (8) which is actuated by an electric motor obviously powered by the vehicle battery proper.

According to this design, the pressurization of the oxidizer which reaches the combustion chambers of the engine is achieved based upon two factors: on one hand, based upon the concentration produced in the air intake manifold (1), which is obviously, as has previously been stated, a function of the speed of the vehicle; and, on the other, as a function of the power level of the compressor (8), which, as has also previously been stated, is variable, said compressor (8) being aided by a microprocessor, which, in terms of the value of the incoming pressure into the induction manifold (5), controlled by a pressure gauge (9), takes on the suitable operating regime so that said intake pressure into the combustion chambers will be the most ideal.

In conjunction with the above, and from the standpoint of thermal control for the oxidizer, provision has been made for the opening (2) of the intake manifold (1) to be fitted with a heat exchanger (10), it being possible for this heat exchanger to take the form of the conventional vehicle radiator, a coolant fluid being pumped through the radiator (10) from an electro-thermal converter (11), preferably in the form of a Peltier, the cold plate of which is bathed by said coolant fluid, which is pumped to the radiator (10) by means of a small pump (12), which is also electric.

As has just been stated above, as a heat exchanger for the air intake manifold (1), the radiator proper (10) of the vehicle can be used, inasmuch as it reduces its size for cooling the power unit (13), given that provision has been made to this end for coupling, at the outlet (14) of the cooling circuit of said power unit (13), a reverse Peltier (15), obviously being inserted into the return line (16) for said cooling fluid, such that, in this case, the coolant fluid will bathe the hot plate of the Peltier (15), the hot plate of which will be cooled by means of the ambient air proper, an electric current being generated to boost the battery.

At the outlet of the reverse Peltier (15), a conventional thermostat (17) is established which will open only when the coolant fluid temperature exceeds a preset value.

Lastly, at the exhaust (18) of the engine, for the purpose of also taking advantage of the high temperature of

Lastly, at the exhaust (18) of the engine, for the purpose of also taking advantage of the high temperature of the exhaust gases, provision has been made for another Peltier (19) to be installed, which, also in terms of the difference in temperature between the exhaust and the ambient air, is capable of generating electricity, in the form of direct current, which the battery can also store.

The motor will continue to use the conventional electric fans with automatic control by thermal contact which will preferably be dual-speed (90EC and 95EC), operating at the outlet of the reverse cooling Peltier (15), for those times when the engine heats up due to its being poorly ventilated, which occurs when the vehicle is running at slow speed. If we use 2 electric fans, the one with the lowest temperature 90°C works on (15) and the one at 95°C works on the classic radiator ; this one reduces its size more than a half.

It is not deemed necessary for the description to be lengthened further for any expert on the subject to be able to comprehend the scope of the invention and the advantages stemming therefrom.

The materials, format, size and layout of the component parts may be varied provided that no change in the essential aspect of the invention is entailed.

## Claims

1. An engine assembly of automobile vehicles, which has the object of improving the performance of the engine and reduce its contaminant effects, assembly for which at the comburent input (4) to an admission collector (5), there are the classical air filters (6) and intercooler (7), means (1-8) that increase the pressure with which the comburent reaches the admission collector and means (10) to cool the comburent, means that consist of an input collector which, located at the front of the vehicle, offers a wide opening for the intake of atmospheric air, converging towards a neck with a coupling to the admission collector supply conduit, and in a compressor located in the supply conduit itself, **characterised in that** these means (10) that cool the comburent are aided by an electro-thermal converter (11), preferably a peltier, fed by the vehicle's battery, and a cold plate of which is bathed by a thermal transmitter liquid that, with the help of a small pump (12) is circulated through a thermal interchanger (10) to cool the comburent.

2. Engine assembly of automobile vehicles, according to claim 1, **characterised in that** the input collector (1), through the relevant conduit (4), leads directly to the admission collector (5), acting as comburent.

3. Engine assembly of automobile vehicles, according to claim 1, **characterised in that** the electric compressor (B) is of variable power and controlled by a microprocessor, aided by a manometer (9) that detects the pressure in the admission collector (5) so that the compressor (8) compensates the variations of pressurisation in the input collector (1) due to the different speed of the vehicle, at all times adapting the pressure in the admission collector (5) to the ideal value.

## Patentansprüche

1. In den Motoraufbau von Kraftfahrzeugen eingebaute Verbesserungen, die zum Ziel haben, die Wirtschaftlichkeit des Motors zu verbessern und dessen kontaminierende Wirkungen zu verringern. Für diesen Aufbau existieren am Einlass des Verbrennungsförderers (4) zur Ansaugsammelrohrleitung (5) die klassischen Luftfilter (6) und Zwischenkühler (7), Mittel (1-8), die den Druck erhöhen, mit dem der Verbrennungsförderer die Ansaugsammelrohrleitung erreicht und Mittel (10) zur Kühlung des Verbrennungsförderers, Mittel, die aus einer vorn am Fahrzeug befindlichen Ansaugsammelleitung bestehen, die eine breite Öffnung zur Ansaugung atmosphärischer Luft bieten und dabei zu einem Hals mit einer Kopplung zum Ansaugsammelversorgungsmetallschlauch zusammenlaufen und in einem im Versorgungsmetallschlauch selbst untergebrachten Verdichter und sich dadurch kennzeichnen, dass diese Mittel (10), die den Verbrennungsförderer kühlen, von einem elektrothermischen Wandler (11), vorzugsweise Peltier, unterstützt werden, der von der Fahrzeugbatterie gespeist wird und der Kühlplatte, die von der Wärmeübertragungsflüssigkeit umspült wird, die mit Hilfe einer kleinen Pumpe (12) durch den Wärmetauscher (10) umläuft.

2. In den Motoraufbau von Kraftfahrzeugen eingebaute Verbesserungen gemäß Patentanspruch 1, die sich dadurch kennzeichnen, dass die Ansaugsammelleitung (1) durch den einschlägigen Metallschlauch (4) direkt zur Ansaugsammelrohrleitung (5) führt und dabei als Verbrennungsförderer fungieren.

3. In den Motoraufbau von Kraftfahrzeugen eingebaute Verbesserungen gemäß Patentanspruch 1, die sich dadurch kennzeichnen, dass der elektrische Verdichter (8) eine variable Leistung hat und durch einen Mikroprozessor gesteuert wird, der von einem Druckmesser (9) unterstützt wird, der den Druck in der Ansaugsammelrohrleitung (5) feststellt, so dass der Verdichter (8) die Unter-Druck-Setzungsschwankungen in der Ansaugsammelleitung (1) aufgrund der unterschiedlichen Fahrzeuggeschwindigkeit ausgleicht und dabei den Druck in der Ansaugsammelrohrleitung (5) jederzeit an den Idealwert anpasst.

## Revendications

1. Améliorations apportées à l'ensemble moteur des véhicules automobiles, qui ont pour objectif d'améliorer les performances du moteur et de réduire ses effets polluants. Cet ensemble moteur présente, à l'entrée de comburant (4) vers le collecteur d'admission (5), les filtres à air classiques (6) et l'échangeur intermédiaire (7), les dispositifs (1-8) qui augmentent la pression à laquelle le comburant accède au collecteur d'admission et les dispositifs (10) de refroidissement du comburant, qui consistent en un collecteur d'entrée placé à l'avant du véhicule, possédant un large orifice d'entrée de l'air atmosphérique qui converge vers un goulot pourvu d'un raccord au conduit d'alimentation du collecteur d'admission, et en un compresseur placé dans le conduit d'alimentation lui-même, se caractérisant par ces dispositifs (10) qui refroidissent le comburant en étant assistés d'un convertisseur à effet thermoélectrique (11), de préférence de type Peltier, alimenté par la batterie du véhicule, et dont la plaque de refroidissement est baignée par le liquide de transmission thermique qui, à l'aide d'une petite pompe (12), circule dans l'échangeur thermique (10).

2. Améliorations apportées à l'ensemble moteur des véhicules automobiles, conformément à la déclaration 1, se caractérisant par un collecteur d'entrée (1) qui, au travers du conduit approprié (4), mène directement au collecteur d'admission (5), agissant comme comburant.

3. Améliorations apportées à l'ensemble moteur des véhicules automobiles, conformément à la déclaration 1, se caractérisant par un compresseur électrique (8) de puissance variable commandé par un microprocesseur, aidé d'un manomètre (9) qui détecte la pression dans le collecteur d'admission (5), de sorte que le compresseur (8) compense les variations de pressurisation, dues aux différentes vitesses du véhicule, du collecteur d'entrée (1), adaptant à tout instant la pression du collecteur d'admission (5) à la valeur idoine.
